# EUROPEAN PATENT APPLICATION

(11) **EP 4 092 877 A1**
(43) Date of publication of application: **23.11.2022**
(21) Application number: 21780809.6
(22) Date of filing: 23.03.2021
(51) Int. Cl.: H02K 1/27, H02K 15/03, H02K 15/12

(54) **ROTOR CORE AND METHOD FOR MANUFACTURING ROTOR CORE**

(30) Priority: 31.03.2020 JP 2020061904
(71) Applicant: AISIN CORPORATION, Kariya-shi, Aichi 448-8650 (JP); TOYOBO CO., LTD., Osaka-shi Osaka 5300001 (JP)
(72) Inventor: FURUTA, Yasunari, Anjo-shi, Aichi 444-1192 (JP); SABURI, Toshiyuki, Kariya-shi, Aichi 448-8650 (JP); TANIGAWA, Masahito, Otsu-shi, Shiga 520-0292 (JP); FUNAOKA, Daiki, Nagoya-shi, Aichi 452-0805 (JP); OYAMA, Tomohito, Tokyo 102-0094 (JP); OZAWA, Yuichi, Hiratsuka-shi, Kanagawa 254-0016 (JP); UETA, Ryo, Hiratsuka-shi, Kanagawa 254-0016 (JP); SAKURABA, Yusaku, Hiratsuka-shi, Kanagawa 254-0016 (JP)
(74) Representative: Kramer Barske Schmidtchen Patentanwälte PartG mbB
(86) International application number: PCT/JP2021/012064
(87) International publication number: WO 2021/200407

(57) **Abstract**

A rotor core includes a thermosetting resin material disposed in a magnet housing portion to fix a permanent magnet in the magnet housing portion. The resin material has a coefficient of linear expansion that is equal to or less than the coefficient of linear expansion of electromagnetic steel sheets.

## Description

### TECHNICAL FIELD

The present invention relates to a rotor core and a method of manufacturing a rotor core.

### BACKGROUND ART

There have hitherto been known a rotor core in which permanent magnets are fixed by a resin material and a method of manufacturing the rotor core. The rotor core and the method of manufacturing the rotor core are disclosed in Japanese Patent No. 5971176 (JP 5971176 B), for example.

JP 5971176 B discloses a rotor core provided with a plurality of hole portions. A magnet is inserted into each of the plurality of hole portions of the rotor core. A thermosetting fixing member is provided in the hole portions. The fixing member is used to fix the magnets disposed in the hole portions. The fixing member is a thermosetting resin containing an epoxy resin. The fixing member is cured by heating the rotor core with the hole portions filled with the fixing member.

### Related Art Documents

### Patent Documents

Patent Document 1: Japanese Patent No. 5971176 (JP 5971176 B)

### SUMMARY OF THE INVENTION

### Problem to be Solved by the Invention

When the fixing member is cured, however, the fixing member is contracted by a certain amount in the state of being secured to the rotor core, although not clearly stated in JP 5971176 B. Therefore, the fixing member receives a tensile stress from the rotor core when the fixing member is contracted. In addition, the above curing step is followed by a cooling step of cooling the rotor core, although not clearly stated in JP 5971176 B. In the cooling step, each of the rotor core and the fixing member is contracted by being cooled. Here, in general, a thermosetting resin containing an epoxy resin has a coefficient of linear expansion that is larger than that of electromagnetic steel sheets that constitute a rotor core. Thus, the fixing member is contracted more significantly than the rotor core in the cooling step. In this case, the fixing member receives a tensile stress from the rotor core. That is, the fixing member receives a tensile stress from the rotor core in each of the curing step for the fixing member and the cooling step. Therefore, the tensile stress applied in each of the curing step for the fixing member and the cooling step disadvantageously remains in the fixing member as a residual stress. In this case, the fixing member may be damaged because of the residual stress when the rotor is rotated, etc.

The present invention has been made to address the foregoing issue, and one object of the present invention is to provide a rotor core in which a resin material can be prevented from being damaged and a method of manufacturing the rotor core.

### Means for Solving the Problem

In order to achieve the above object, a first aspect of the present invention provides a rotor core including: a stacked core constituted by stacking a plurality of electromagnetic steel sheets, the stacked core including a magnet housing portion provided so as to extend in a stacking direction of the electromagnetic steel sheets; a permanent magnet disposed in the magnet housing portion of the stacked core; and a thermosetting resin material charged in the magnet housing portion between the stacked core and the permanent magnet to fix the permanent magnet in the magnet housing portion, the resin material having a coefficient of linear expansion that is equal to or less than a coefficient of linear expansion of the electromagnetic steel sheets.

As described above, the rotor core according to the first aspect of the present invention includes a thermosetting resin material that has a coefficient of linear expansion that is equal to or less than the coefficient of linear expansion of the electromagnetic steel sheets. Here, to cure the thermosetting resin material, the molten resin material is injected into the magnet housing portion and heated. In this event, the resin material is contracted in the state of being secured to the stacked core, and thus the resin material receives a tensile stress from the stacked core. Each of the resin material and the stacked core is contracted when the stacked core and the resin material are cooled after the resin material is cured. In this event, the amount by which the resin material is contracted is equal to or less than the amount by which the electromagnetic steel sheets (stacked core) are contracted in the stacking direction of the electromagnetic steel sheets, since the coefficient of linear expansion of the resin material is equal to or less than the coefficient of linear expansion of the electromagnetic steel sheets. In this case, the tensile stress that the resin material receives from the stacked core is not increased, and thus the residual stress in the resin material after the manufacturing process for the rotor core can be rendered equal to or less than the tensile stress generated in the curing step. As a result, the residual stress in the resin material after the manufacturing process for the rotor core can be rendered small compared to the case where the coefficient of linear expansion of the resin material is larger than the coefficient of linear expansion of the electromagnetic steel sheets and the tensile stress that acts on the resin material is increased in the cooling step for the resin material. As a result, the resin material can be prevented from being damaged during operation of the rotor etc.

The coefficient of thermal expansion of the resin material is equal to or less than the coefficient of linear expansion of the electromagnetic steel sheets, and thus the amount of expansion (amount of contraction) of the resin material can be rendered equal to or less than the amount of expansion (amount of contraction) of the electromagnetic steel sheets even in the case where the temperature of the resin material is varied during operation of the rotor. As a result, it is possible to prevent the stress to be applied to the resin material from becoming large during operation of the rotor, and thus it is possible to more reliably prevent the resin material from being damaged during operation of the rotor.

A second aspect of the present invention provides a method of manufacturing a rotor core that includes a stacked core constituted by stacking a plurality of electromagnetic steel sheets, the stacked core including a magnet housing portion provided so as to extend in a stacking direction of the electromagnetic steel sheets, the method including: an arrangement step of disposing a permanent magnet in the magnet housing portion of the stacked core; a filling step of charging a resin material, which is molten and has a coefficient of linear expansion that is equal to or less than a coefficient of linear expansion of the electromagnetic steel sheets, in the magnet housing portion between the stacked core and the permanent magnet after the arrangement step; a curing step of curing the resin material by heating the resin material after the filling step; and a cooling step of cooling the stacked core and cooling the resin material after the curing step.

As described above, the method of manufacturing a rotor core according to the second aspect of the present invention includes a filling step of charging a resin material, which is molten and has a coefficient of linear expansion that is equal to or less than the coefficient of linear expansion of the electromagnetic steel sheets, in the magnet housing portion. Here, in the curing step, the resin material is contracted in the state of being secured to the stacked core, and thus the resin material receives a tensile stress from the stacked core. In the cooling step, each of the resin material and the stacked core is contracted by being cooled. In this event, the amount by which the resin material is contracted is equal to or less than the amount by which the electromagnetic steel sheets (stacked core) are contracted in the stacking direction of the electromagnetic steel sheets, since the coefficient of linear expansion of the resin material is equal to or less than the coefficient of linear expansion of the electromagnetic steel sheets. In this case, the resin material does not receive a stress from the stacked core, or receives a compressive stress from the stacked core, and thus the residual stress in the resin material after the manufacturing process for the rotor core can be rendered equal to or less than the tensile stress generated in the curing step for the resin material. As a result, the residual stress in the resin material after the manufacturing process for the rotor core can be rendered small compared to the case where the coefficient of linear expansion of the resin material is larger than the coefficient of linear expansion of the electromagnetic steel sheets and the tensile stress that acts on the resin material is increased in the cooling step for the resin material. As a result, it is possible to provide a method of manufacturing a rotor core in which a resin material can be prevented from being damaged during operation of a rotor etc.

### Effects of the Invention

With the present invention, it is possible to prevent a resin material from being damaged.

### BRIEF DESCRIPTION OF THE DRAWINGS

[FIG. 1] FIG. 1 is a plan view illustrating the configuration of a rotor (rotary electric machine) according to an embodiment.
[FIG. 2] FIG. 2 is a sectional view of a rotor core according to the embodiment.
[FIG. 3] FIG. 3 is a flowchart illustrating a method of manufacturing the rotor core according to the embodiment.
[FIG. 4] FIG. 4 is a chart illustrating the state of stresses for a resin material and a stacked core at the time of manufacture of the rotor core according to the embodiment.
[FIG. 5] FIG. 5 is a chart illustrating variations in the axial dimension of the resin material, the stacked core, a permanent magnet, and a resin mold (comparative example) at the time of manufacture of the rotor core according to the embodiment.
[FIG. 6] FIG. 6 is a chart illustrating variations in the axial dimension difference of each of the resin material and the resin mold (comparative example) with respect to the stacked core at the time of manufacture of the rotor core according to the embodiment.
[FIG. 7] FIG. 7 is a chart illustrating variations in the axial dimension difference of each of the resin material and the resin mold (comparative example) with respect to the permanent magnet at the time of manufacture of the rotor core according to the embodiment.
[FIG. 8] FIG. 8 is a chart illustrating variations in the axial dimension of the resin material, the stacked core, the permanent magnet, and the resin mold (comparative example) at the time of use of the rotor core according to the embodiment.
[FIG. 9] FIG. 9 is a chart illustrating variations in the axial dimension difference of each of the resin material and the resin mold (comparative example) with respect to the stacked core at the time of use of the rotor core according to the embodiment.
[FIG. 10] FIG. 10 is a chart illustrating variations in the axial dimension difference of each of the resin material and the resin mold (comparative example) with respect to the permanent magnet at the time of use of the rotor core according to the embodiment.

### MODES FOR CARRYING OUT THE INVENTION

An embodiment of the present invention will be described below with reference to the drawings.

### [Present Embodiment]

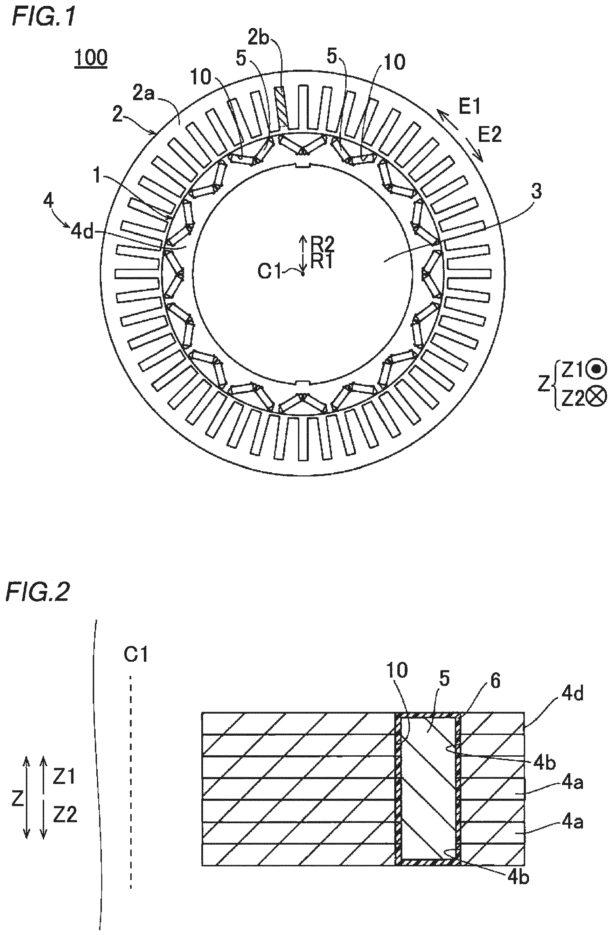

A rotor core 4 according to the present embodiment and a method of manufacturing the rotor core 4 will be described with reference to FIGS. 1 to 10.

Herein, the term "axial direction" means the direction along a rotational axis C1 of a rotor 1 (rotor core 4), and means the Z direction in the drawings. The term "stacking direction" means the direction in which electromagnetic steel sheets 4a (see FIG. 2) of the rotor core 4 are stacked, and means the Z direction in the drawings. The term "radial direction" means the radial direction (R1 direction or R2 direction) of the rotor 1 (rotor core 4), and the "circumferential direction" means the circumferential direction (E1 direction or E2 direction) of the rotor 1 (rotor core 4).

As illustrated in FIG. 1, the rotary electric machine 100 includes the rotor 1 and a stator 2. The rotor 1 and the stator 2 are each formed in an annular shape. The rotor 1 is disposed to face the radially inner side of the stator 2. That is, in the present embodiment, the rotary electric machine 100 is constituted as a rotary electric machine of an inner rotor type. A shaft 3 is disposed on the radially inner side of the rotor 1. The shaft 3 is connected to an engine or an axle via a rotational force transfer member such as a gear. For example, the rotary electric machine 100 is constituted as a motor, a generator, or a motor/generator, and configured to be mounted on a vehicle. In FIG. 1, a resin material 6 to be discussed later is not illustrated for simplicity.

The rotor core 4 includes a stacked core 4d formed by stacking a plurality of electromagnetic steel sheets 4a (see FIG. 2) that has a plurality of hole portions 4b with a closed periphery, the hole portions 4b overlapping each other in the axial direction to form magnet housing portions 10 that extend in the stacking direction of the electromagnetic steel sheets 4a. That is, the magnet housing portions 10 are each a space extending in the axial direction of the stacked core 4d with a periphery surrounded by the stacked core 4d. The rotor core 4 includes permanent magnets 5 disposed in the magnet housing portions 10 of the stacked core 4d. A plurality of (32 in the present embodiment) magnet housing portions 10 is provided in the stacked core 4d. That is, the rotary electric machine 100 is constituted as an interior permanent magnet (IPM) motor. The magnet housing portions 10 are disposed on the radially outer side of the stacked core 4d (rotor core 4). Two magnet housing portions 10 that are adjacent to each other are disposed in a V-shape. The arrangement and the number of the magnet housing portions 10 are not limited thereto.

The stator 2 includes a stator core 2a and a coil 2b disposed in the stator core 2a. The stator core 2a is formed by stacking a plurality of electromagnetic steel sheets (silicon steel sheets) in the axial direction, and configured to enable transmission of magnetic flux, for example. The coil 2b is connected to an external power source unit, and configured to be supplied with electric power (e.g. three-phase alternating current electric power). The coil 2b is configured to generate a magnetic field by being supplied with electric power. The rotor 1 and the shaft 3 are configured to rotate with respect to the stator 2 as the engine etc. is driven or the axle is rotated, even in the case where no electric power is supplied to the coil 2b. While only a part of the coil 2b is illustrated in FIG. 1, the coil 2b is disposed over the entire circumference of the stator core 2a.

The permanent magnets 5 each have a rectangular cross section that is orthogonal to the axial direction of the stacked core 4d (rotor core 4). The surface of the permanent magnets 5 is covered with an insulating film, on which minute irregularities are formed. The length of the permanent magnets 5 along the axial direction is equal to or less than the axial length of the magnet housing portions 10. For example, the permanent magnets 5 are configured such that the magnetization direction matches the shorter direction of the cross section of the permanent magnets 5 that is orthogonal to the axial direction. The permanent magnets 5 may be neodymium magnets, for example.

The rotor core 4 includes a thermosetting resin material 6 (see FIG. 2) charged in the magnet housing portions 10. The resin material 6 is provided so as to fix, in the magnet housing portions 10, the permanent magnets 5 disposed in the magnet housing portions 10. Specifically, the resin material 6 is charged in the space between the hole portions 4b of the stacked core 4d that form the magnet housing portions 10 and the permanent magnets 5 to fix the permanent magnets 5 to the stacked core 4d. The resin material 6 is melted by being heated to a first temperature T1 (e.g. 80°C) or higher. The resin material 6 is cured by being heated to a second temperature T2 (e.g. 110°C) or higher, the second temperature T2 being higher than the first temperature T1. Particularly, the resin material 6 is solid (flake-like, pellet-like, powder-like, etc.) at normal temperature that is lower than the first temperature T1, and is melted when the resin material 6 is heated from normal temperature to a temperature that is equal to or higher than the first temperature T1. The resin material 6 is configured to maintain the molten state (not to be cured) at the first temperature T1 or higher and lower than the second temperature T2. The resin material 6 is configured to be cured by being heated to the second temperature T2 or higher in the molten state. In FIG. 1, the resin material 6 is not illustrated for simplicity.

A synthetic resin material such as that described in Japanese Unexamined Patent Application Publication No. 2018-145280 (JP 2018-145280 A) can be used as the resin material 6, for example. The coefficient of linear expansion of the synthetic resin material can be reduced by adding an inorganic filler (filler) to the synthetic resin material. The coefficient of linear expansion of the synthetic resin material containing no inorganic filler is several tens of micrometers/°C, and the coefficient of linear expansion of the inorganic filler alone is ten or so micrometers/°C. The coefficient of linear expansion of the synthetic resin material is reduced in accordance with the compound rule by adding the inorganic filler to the synthetic resin material. The compound rule is a general technical term, and thus is not discussed in detail herein. That is, the resin material 6 that is used in the present invention contains an inorganic filler. The coefficient of linear expansion of the resin material 6 is reduced by increasing the weight ratio of the inorganic filler. The weight ratio of the inorganic filler is in the range of 50 to 95% by weight with respect to the total amount of the resin material 6. In particular, the resin material 6 contains a highest weight ratio of amorphous silica (coefficient of linear expansion: 0.5 µm/°C), in order to reduce the coefficient of linear expansion of the resin material 6. The constitution of the resin material 6 is not limited thereto, and any thermosetting resin material that has a different constitution may also be used.

Here, in the present embodiment, the resin material 6 has a coefficient of linear expansion that is smaller than the coefficient of linear expansion of the electromagnetic steel sheets 4a (stacked core 4d). Specifically, the coefficient of linear expansion of the electromagnetic steel sheets 4a is about 13 µm/°C. Meanwhile, the coefficient of linear expansion of the resin material 6 is about 11 µm/°C. For a rotor core of a rotary electric machine that is used for a drive device for a vehicle, the coefficient of linear expansion of the electromagnetic steel sheets 4a can be in the range of 11.5 µm/°C or more and 13 µm/°C or less, and the coefficient of linear expansion of the resin material 6 can be in the range of 9 µm/°C or more and 11.5 µm/°C or less. When the coefficient of linear expansion of the resin material 6 is less than 9 µm/°C, the weight ratio of the inorganic filler in the resin material 6 is much larger, and thus the flowability of the resin material 6 is reduced in a filling step of a manufacturing process for the rotor core 4 to be discussed later. That is, the productivity of the rotor core 4 is reduced. Thus, the coefficient of linear expansion of the resin material 6 is preferably 9 µm/°C or more.

In the present embodiment, the coefficient of linear expansion of the resin material 6 is smaller than the coefficient of linear expansion of the electromagnetic steel sheets 4a, and larger than the coefficient of linear expansion of the permanent magnets 5. Specifically, the coefficient of linear expansion of the permanent magnets 5 is about 2 µm/°C before magnetization (during manufacture of the rotor core 4), and about -2.3 µm/°C after magnetization (during use of the rotor core 4 (during operation of the rotor 1)). The magnetized state means a state in which the directions of magnetic forces in the permanent magnets 5 have been organized. The direction of magnetization is the shorter direction of the cross section of the permanent magnets 5 that is orthogonal to the axial direction as discussed earlier. It is known as a general technical common sense that the coefficient of linear expansion of neodymium magnets takes different values for the magnetization direction and a direction that is perpendicular to the magnetization direction. The coefficient of linear expansion of the permanent magnets 5 as used herein refers to the coefficient of linear expansion of the permanent magnets 5 in a direction that is perpendicular to the magnetization direction, that is, the axial direction. The coefficient of linear expansion of the permanent magnets 5 may take a negative value (e.g. -1.5 µm/°C) even before magnetization (during manufacture of the rotor core 4). Hence, for a rotor core of a rotary electric machine that is used as a drive device for a vehicle, the coefficient of linear expansion of the permanent magnets 5 can be in the range of -1.5 µm/°C or less and -2.3 µm/°C or more, irrespective of whether before or after magnetization.

That is, the coefficient of linear expansion of the resin material 6 is a value that is closer to the coefficient of linear expansion of the electromagnetic steel sheets 4a than the middle value between the coefficient of linear expansion of the electromagnetic steel sheets 4a and the coefficient of linear expansion of the permanent magnets 5. The coefficient of linear expansion of the resin material 6 is a value that is closer to the coefficient of linear expansion of the electromagnetic steel sheets 4a than the middle value between the coefficient of linear expansion of the electromagnetic steel sheets 4a and the above middle value.

In the present embodiment, the resin material 6 has a glass transition temperature T3 that is higher than the second temperature T2. For example, the glass transition temperature T3 is about 210°C. That is, the glass transition temperature T3 is a temperature that is higher than the upper limit temperature (180°C) at which the resin material 6 is heated during operation of the rotor 1 and during manufacture of the rotor core 4.

### (Method of Manufacturing Rotor Core, and Stress Generated Between Resin Material and Stacked Core)

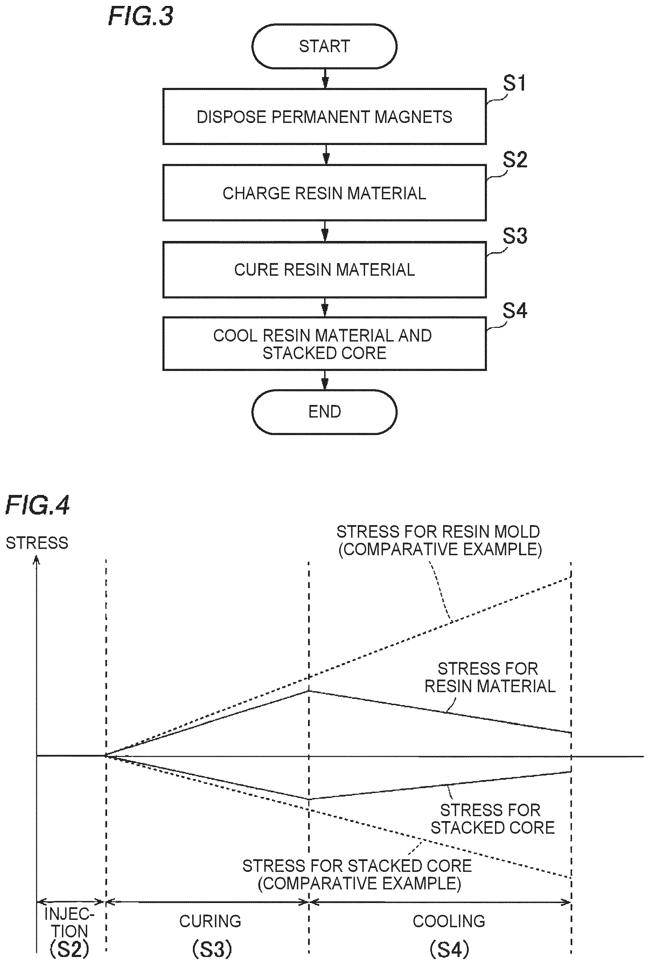

Next, the method of manufacturing the rotor core 4 according to the present embodiment will be described with reference to FIGS. 3 to 7.

First, as illustrated in FIG. 3, a step of disposing the permanent magnets 5 in the magnet housing portions 10 of the stacked core 4d (see FIG. 2) is performed in step S1.

Next, a filling step of charging the molten resin material 6, which has a coefficient of linear expansion that is smaller than the coefficient of linear expansion of the electromagnetic steel sheets 4a, in the magnet housing portions 10 of the stacked core 4d between the stacked core 4d and the permanent magnets 5 is performed in step S2. Specifically, the resin material 6 is heated at a temperature that is equal to or higher than the first temperature T1 and lower than the second temperature T2, and brought into the molten state (fluid) to fill the space between the magnet housing portions 10 and the permanent magnets 5. The resin material 6 is preferably injected such that side surfaces of the permanent magnets 5 that extend along the axial direction are surrounded by the resin material 6. When the resin material 6 is injected, the stacked core 4d has been preliminarily heated at a predetermined temperature (e.g. 140°C).

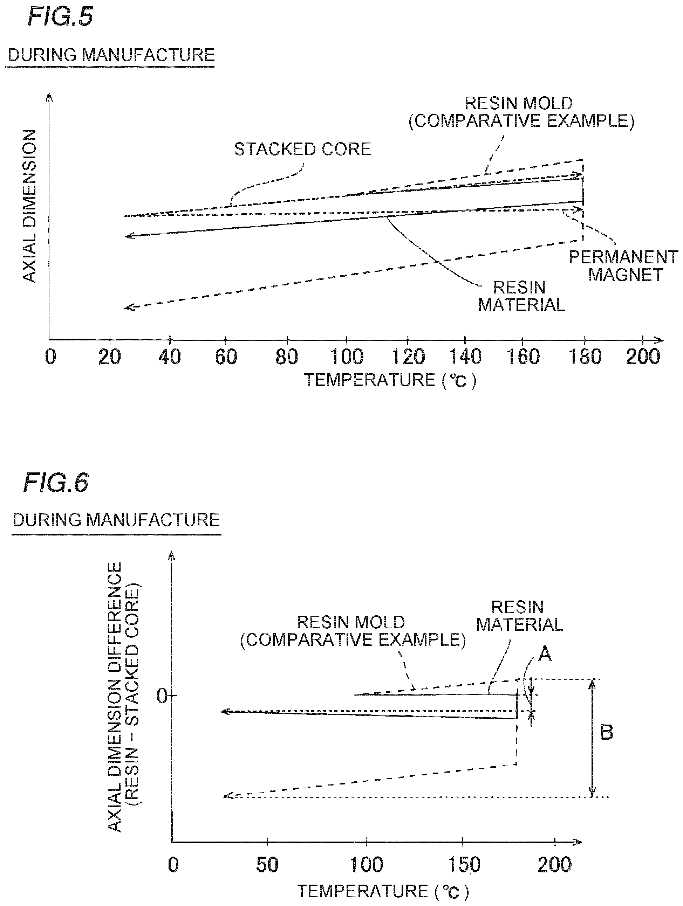

In the filling step, as illustrated in FIG. 4, the resin material 6 is fluid and is not secured to the stacked core 4d, and thus follows thermal expansion (see FIG. 5) of the stacked core 4d. Thus, in the filling step, no stress acts since the dimension difference (dimension of the resin material 6 - dimension of the stacked core 4d) in the axial direction between the resin material 6 and the stacked core 4d due to thermal expansion of the resin material 6 and the stacked core 4d is zero. Hereinafter, the dimension of the stacked core 4d in the axial direction may be replaced with the axial dimension of the magnet housing portions 10, unless specifically stated otherwise. The axial dimension of the resin material 6 means the axial dimension of the resin material 6 after being injected into the magnet housing portions 10, unless specifically stated otherwise. The term "stress" as used herein means a stress generated because of the dimension difference in the axial direction between the resin material 6 and the stacked core 4d with the resin material 6 and the stacked core 4d secured to each other, and a tensile stress or a compressive stress that acts on the resin material 6 in the axial direction of the stacked core 4d.

Next, as illustrated in FIG. 3, a curing step of curing the resin material 6 by heating the resin material 6 and securing the resin material 6 to the stacked core 4d is performed in step S3. Specifically, as illustrated in FIG. 5, the resin material 6 and the stacked core 4d are heated to a temperature (e.g. about 180°C) that is higher than the second temperature T2. The temperature of the resin material 6 is raised mainly by heat transferred from the inner wall surfaces of the magnet housing portions 10 of the stacked core 4d, and therefore the resin material 6 is cured and secured to the stacked core 4d from a portion of the resin material 6 in contact with the inner wall surfaces of the magnet housing portions 10. Curing of the resin material 6 and securing of the resin material 6 to the stacked core 4d are completed as the resin material 6 is maintained in the heated state at about 180°C for a certain time. The status of securing will be specifically described. Recessed portions (not illustrated) are formed at the boundary portion between the hole portions 4b of the electromagnetic steel sheets 4a stacked to form the magnet housing portions 10, and the resin material 6 that has entered the recessed portions is formed into a wedge shape when cured. As a result, the resin material 6 is secured as penetrating into the magnet housing portions 10 of the stacked core 4d. While the temperature is maintained at about 180°C, the stacked core 4d is not expanded or contracted, since the temperature is not varied. On the other hand, the resin material 6 is contracted by a certain amount in the axial direction by being cured. In this case, as illustrated in FIG. 6, the dimension difference (dimension of the resin material 6 - dimension of the stacked core 4d) in the axial direction between the stacked core 4d and the resin material 6 is decreased.

That is, in the curing step, a tensile stress due to the dimension difference between the resin material 6 and the stacked core 4d acts on the resin material 6 as the resin material 6 is cured and contracted while being secured to the stacked core 4d. Thus, in the curing step, a tensile stress correlated with the amount of contraction of the resin material 6 acts on the resin material 6.

In the curing step, a compressive stress acts on the stacked core 4d because of the resin material 6 being contracted in the state of being secured to the stacked core 4d. Thus, in the curing step, a compressive stress correlated with the amount of contraction of the resin material 6 acts on the stacked core 4d.

Next, as illustrated in FIG. 3, a cooling step of cooling the stacked core 4d and cooling the resin material 6 is performed in step S4. Specifically, in this step, the stacked core 4d and the resin material 6 are cooled from the high-temperature state (about 180°C) to room temperature (about 25°C).

As illustrated in FIG. 5, each of the resin material 6 and the stacked core 4d is contracted in the axial direction by the cooling in the cooling step. Here, the coefficient of linear expansion of the resin material 6 is smaller than the coefficient of linear expansion of the electromagnetic steel sheets 4a, and thus the stacked core 4d is contracted more significantly than the resin material 6. In this case, as illustrated in FIG. 6, the dimension difference (dimension of the resin material 6 - dimension of the stacked core 4d) in the axial direction between the stacked core 4d and the resin material 6 is increased in the cooling step. That is, the above dimension difference approaches zero from the negative side in the cooling step.

That is, when the temperatures of the stacked core 4d and the resin material 6 are dropped in the cooling step, the stacked core 4d is contracted more significantly than the resin material 6, which relaxes the tensile stress acting on the resin material 6 because of the stacked core 4d being secured to the resin material 6. In the case where the coefficient of linear expansion of the resin material 6 is smaller than the coefficient of linear expansion of the electromagnetic steel sheets 4a and the difference between the respective coefficients of linear expansion of the resin material 6 and the electromagnetic steel sheets 4a is large, a transition may be made to a compressive stress state after the tensile stress acting on the resin material 6 is relaxed in the cooling step. This means that the gradients of the line of the stress on the resin material 6 and the line of the stress on the stacked core 4d become larger in the cooling step (S4) in FIG. 4. Thus, a stress correlated with the difference between the amount of contraction of the resin material 6 and the amount of contraction of the stacked core 4d acts on the resin material 6 in the cooling step.

As described above, the dimensional difference between the resin material 6 and the stacked core 4d is decreased in the curing step, and the dimensional difference between the resin material 6 and the stacked core 4d is increased in the cooling step. Consequently, the tensile stress accumulated in the resin material 6 in the curing step is relaxed in the cooling step as illustrated in FIG. 4.

As the dimensional difference between the resin material 6 and the stacked core 4d is increased in the cooling step, the compressive stress acting on the stacked core 4d in the curing step is relaxed.

Here, a case where a resin (hereinafter referred to as a "resin mold", see the broken lines in FIGS. 5 and 6) (comparative example) with a coefficient of linear expansion that is larger than that of the electromagnetic steel sheets 4a is used will be described.

As illustrated in FIG. 5, the resin mold has a higher thermal contraction rate when heated to be cured than that of the resin material 6, and thus is contracted more significantly than the resin material 6 in the curing step. Thus, in the curing step, a tensile stress (see FIG. 4) that is larger than the tensile stress that acts on the resin material 6 acts on the resin mold. A compressive stress (see FIG. 4) that is larger than that for the resin material 6 acts on the stacked core 4d.

In the cooling step, the resin mold is contracted more significantly than the stacked core 4d, since the coefficient of linear expansion of the resin mold is larger than that of the electromagnetic steel sheets 4a. In this case, the dimension difference (dimension of the resin mold - dimension of the stacked core 4d) in the axial direction between the resin mold and the stacked core 4d is decreased (see the broken line in FIG. 6) in the cooling step. That is, the above dimension difference becomes larger on the negative side in the cooling step. That is, a tensile stress due to the above dimension difference acts on the resin mold in the cooling step. A compressive stress due to the above dimension difference acts on the stacked core 4d in the cooling step.

Thus, as illustrated in FIG. 4, in the case where the resin mold is used (comparative example), a tensile stress acts on the resin mold and a compressive stress acts on the stacked core 4d in both the curing step and the cooling step. Therefore, the stress is not relaxed in each of the resin mold and the stacked core 4d during the curing step and the cooling step. Thus, the residual stress in each of the resin material 6 and the stacked core 4d after the manufacturing process for the rotor core 4 is reduced in the case where the resin material 6 is used, compared to the case of the comparative example.

As illustrated in FIG. 6, if the axial dimension difference for the resin material 6 (dimension of the resin material 6 - dimension of the stacked core 4d) is decreased (increased on the negative side) by a value A since the curing step until the cooling step, the axial dimension difference for the resin mold (comparative example) (dimension of the resin mold - dimension of the stacked core 4d) is decreased (increased on the negative side) by a value B that is larger than the value A since the curing step until the cooling step. This is due to the fact that the amount of contraction of the resin material 6 is smaller than that of the resin mold in each of the curing step and the cooling step.

### (Stress Generated Between Resin Material and Magnets During Manufacture of Rotor Core)

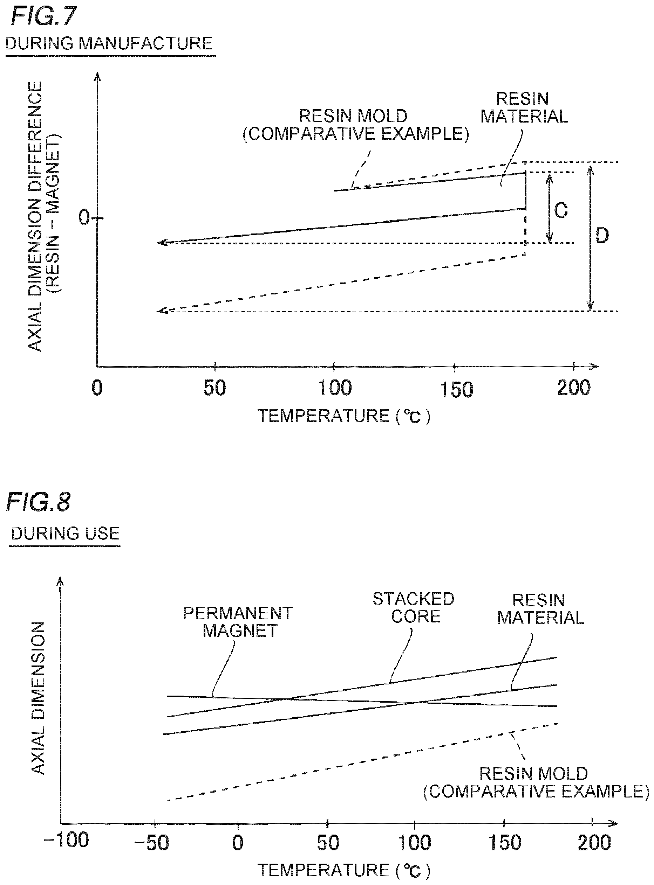

Next, the dimensions of the permanent magnets 5 and the resin material 6 will be described. In the curing step, the resin material 6 is cured, and secured to the permanent magnets 5. Specifically, the resin material 6 that has entered the recessed portions formed in the insulating film that covers the surface of the permanent magnets 5 is cured so that the resin material 6 is secured to the permanent magnets 5. As illustrated in FIG. 7, a tensile stress acts on the resin material 6, since the resin material 6 is contracted in the curing step and the resin material 6 is secured to the permanent magnets 5. The tensile stress on the resin material 6 is increased as the resin material 6 is contracted more significantly than the permanent magnets 5 in the cooling step. In this case, the axial dimension difference for the resin material 6 (dimension of the resin material 6 - dimension of the permanent magnets 5) is decreased by a value C since the curing step until the cooling step.

Also in the case of the resin mold (comparative example), similarly, a tensile stress acts on the resin mold, since the resin mold is contracted in the curing step and the resin mold is secured to the permanent magnets 5, and the tensile stress on the resin mold is increased as the resin mold is contracted more significantly than the permanent magnets 5 in the cooling step. Here, the resin mold is contracted more significantly than the resin material 6 in each of the curing step and the cooling step, and thus the axial dimension difference for the resin mold (dimension of the resin mold - dimension of the permanent magnets 5) is decreased (increased on the negative side) by a value D that is larger than the value C since the curing step to the cooling step. Thus, the tensile stress that acts on the resin material 6 can be decreased in the case where the resin material 6 is used, compared to the comparative example.

### (Stress Acting Between Resin Material and Stacked Core During Use of Rotor Core)

Next, the state during use of the rotor core 4 (in the case where the rotor core 4 is used as incorporated in a motor mounted on a vehicle) will be described with reference to FIGS. 8 to 10.

As illustrated in FIG. 8, each of the stacked core 4d, the resin material 6, and the resin mold (comparative example) is expanded as the temperature rises, and contracted as the temperature drops. Meanwhile, the permanent magnets 5 are contracted as the temperature rises, and expanded as the temperature drops. The axial dimension at normal temperature (25°C) in FIG. 8 represents the axial dimension after the cooling step in FIG. 5.

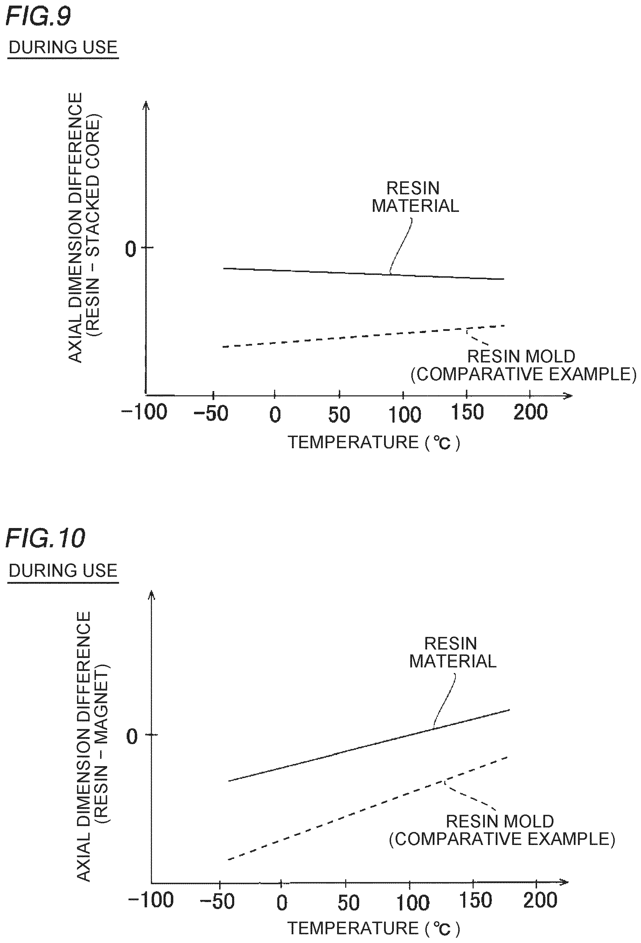

As illustrated in FIG. 9, the coefficient of linear expansion of the resin material 6 is smaller than the coefficient of linear expansion of the electromagnetic steel sheets 4a, and thus the amount of expansion of the resin material 6 that accompanies a temperature rise is smaller than the amount of expansion of the stacked core 4d. That is, the dimension difference (dimension of the resin material 6 - dimension of the stacked core 4d) in the axial direction between the resin material 6 and the stacked core 4d is decreased along with a temperature rise. In other words, the above dimension difference becomes larger on the negative side along with a temperature rise. Consequently, in the case where the residual stress in the resin material 6 at normal temperature is zero or a tensile stress, a tensile stress is generated in the resin material 6, or the residual tensile stress is increased, along with a temperature rise. In the case where the residual stress in the resin material 6 at normal temperature is a compressive stress, the compressive stress acting on the resin material 6 is relaxed, and further the stress acting on the resin material 6 may transition to a tensile stress, along with a temperature rise.

The coefficient of linear expansion of the resin material 6 is smaller than the coefficient of linear expansion of the electromagnetic steel sheets 4a, and thus the amount of contraction of the resin material 6 that accompanies a temperature drop is smaller than the amount of contraction of the stacked core 4d. That is, the dimension difference (dimension of the resin material 6 - dimension of the stacked core 4d) in the axial direction between the resin material 6 and the stacked core 4d is increased along with a temperature drop. In other words, the above dimension difference approaches zero from the negative side along with a temperature drop. Consequently, in the case where the stress acting on the resin material 6 at a high temperature (e.g. about 180°C) is a tensile stress, the tensile stress acting on the resin material 6 is relaxed along with a temperature drop. As relaxation of the tensile stress acting on the resin material 6 that accompanies a temperature drop progresses, the stress that acts on the resin material 6 may be brought beyond zero, and transition to a compressive stress.

The coefficient of linear expansion of the resin mold (comparative example) is larger than the coefficient of linear expansion of the electromagnetic steel sheets 4a, and thus the amount of expansion of the resin mold that accompanies a temperature rise is larger than the amount of expansion of the stacked core 4d. That is, the axial dimension difference (dimension of the resin mold - dimension of the stacked core 4d) between the resin mold and the stacked core 4d is increased along with a temperature rise. On the other hand, the axial dimension difference for the resin mold is decreased when the temperature drops.

The axial dimension difference for the resin material 6 (dimension of the resin material 6 - dimension of the stacked core 4d) is larger than the axial dimension difference for the resin mold (dimension of the resin mold - dimension of the stacked core 4d) over the entire temperature range. That is, the axial dimension difference for the resin material 6 is closer to zero than the axial dimension difference for the resin mold over the entire temperature range. The difference between the axial dimension difference for the resin material 6 and the axial dimension difference for the resin mold becomes larger as the temperature drops.

### (Stress Acting Between Resin Material and Magnets During Use of Rotor Core)

As illustrated in FIG. 10, the coefficient of linear expansion of the resin material 6 is larger than the coefficient of linear expansion of the permanent magnets 5, and thus the amount of expansion of the resin material 6 that accompanies a temperature rise is larger than the amount of expansion of the permanent magnets 5. That is, the dimension difference (dimension of the resin material 6 - dimension of the permanent magnets 5) in the axial direction between the resin material 6 and the permanent magnets 5 is increased along with a temperature rise. Consequently, in the case where the residual stress that the resin material 6 receives from the permanent magnets 5 at normal temperature is a tensile stress, the tensile stress that the resin material 6 receives from the permanent magnets 5 is relaxed along with a temperature rise. As the temperature further rises, the tensile stress that the resin material 6 receives from the permanent magnets 5 may be brought beyond zero, and transition to a compressive stress.

The amount of contraction of the resin material 6 that accompanies a temperature drop is larger than the amount of contraction of the permanent magnets 5. That is, the dimension difference (dimension of the resin material 6 - dimension of the permanent magnets 5) in the axial direction between the resin material 6 and the permanent magnets 5 is decreased along with a temperature drop. Consequently, the tensile stress that the resin material 6 receives from the permanent magnets 5 is increased along with a temperature drop.

As with the resin material 6, the coefficient of linear expansion of the resin mold (comparative example) is larger than the coefficient of linear expansion of the permanent magnets 5. Thus, the tensile stress that the resin mold receives from the permanent magnets 5 is also relaxed along with a temperature rise, and increased along with a temperature drop.

The axial dimension difference for the resin material 6 (dimension of the resin material 6 - dimension of the permanent magnets 5) is larger than the axial dimension difference for the resin mold (comparative example) (dimension of the resin mold - dimension of the permanent magnets 5) over the entire temperature range. The coefficient of linear expansion of the resin material 6 is smaller than the coefficient of linear expansion of the resin mold, and thus the difference between the axial dimension difference for the resin material 6 and the axial dimension difference for the resin mold becomes larger as the temperature drops.

### [Effects of the Present Embodiment]

The following effects can be obtained with the present embodiment.

In the present embodiment, as described above, the rotor core (4) includes a thermosetting resin material (6) charged in the magnet housing portion (10) between the stacked core (4d) and the permanent magnet (5) to fix the permanent magnet (5) in the magnet housing portion (10), the resin material (6) having a coefficient of linear expansion that is equal to or less than a coefficient of linear expansion of the electromagnetic steel sheets (4a). Here, to cure the thermosetting resin material (6), the molten resin material (6) is injected into the magnet housing portion (10) and heated. In this event, the resin material (6) is contracted in the state of being secured to the stacked core (4d), and thus the resin material (6) receives a tensile stress from the stacked core (4d). Each of the resin material (6) and the stacked core (4d) is contracted when the stacked core (4d) and the resin material (6) are cooled after the resin material (6) is cured. In this event, the amount by which the resin material (6) is contracted is equal to or less than the amount by which the electromagnetic steel sheets (4a) (stacked core (4d)) are contracted in the stacking direction of the electromagnetic steel sheets (4a), since the coefficient of linear expansion of the resin material (6) is equal to or less than the coefficient of linear expansion of the electromagnetic steel sheets (4a). In this case, the tensile stress that the resin material (6) receives from the stacked core (4d) is not increased, and thus the residual stress in the resin material (6) after the manufacturing process for the rotor core (4) can be rendered equal to or less than the tensile stress generated in the curing step for the resin material (6). As a result, the residual stress in the resin material (6) after the manufacturing process for the rotor core (4) can be rendered small compared to the case where the coefficient of linear expansion of the resin material (6) is larger than the coefficient of linear expansion of the electromagnetic steel sheets (4a) and the tensile stress that acts on the resin material (6) is increased in the cooling step for the resin material (6). As a result, it is possible to prevent the resin material (6) from being damaged during operation of the rotor (1) etc.

The coefficient of thermal expansion of the resin material (6) is equal to or less than the coefficient of linear expansion of the electromagnetic steel sheets (4a), and thus the amount of expansion (amount of contraction) of the resin material (6) can be rendered equal to or less than the amount of expansion (amount of contraction) of the electromagnetic steel sheets (4a) even in the case where the temperature of the resin material (6) is varied during operation of the rotor (1). As a result, it is possible to prevent the stress that acts on the resin material (6) from becoming large during operation of the rotor (1), and thus it is possible to more reliably prevent the resin material (6) from being damaged during operation of the rotor (1).

In the present embodiment, as described above, the coefficient of linear expansion of the resin material (6) is smaller than the coefficient of linear expansion of the electromagnetic steel sheets (4a). With such a configuration, the amount by which the resin material (6) is contracted is smaller than the amount by which the electromagnetic steel sheets (4a) (stacked core (4d)) are contracted in the cooling step. Consequently, the tensile stress that the resin material (6) receives from the stacked core (4d) in the cooling step is relaxed. As a result, the residual stress in the resin material (6) after the manufacturing process for the rotor core (4) can be reduced. Consequently, it is possible to more reliably prevent the resin material (6) from being damaged during operation of the rotor (1) etc.

In the present embodiment, as described above, the coefficient of linear expansion of the electromagnetic steel sheets (4a) is in a range of 11.5 µm/°C or more and 13 µm/°C or less, and the coefficient of linear expansion of the resin material (6) is in a range of 9 µm/°C or more and 11.5 µm/°C or less. With such a configuration, the coefficient of linear expansion of the resin material (6) can be easily rendered smaller than the coefficient of linear expansion of the electromagnetic steel sheets (4a).

In the present embodiment, as described above, the coefficient of linear expansion of the resin material (6) is equal to or less than the coefficient of linear expansion of the electromagnetic steel sheets (4a), and more than a coefficient of linear expansion of the permanent magnet (5). With such a configuration, the coefficient of linear expansion of the resin material (6) can be set to a value that is close to the coefficient of linear expansion of the permanent magnet (5), compared to the case where the coefficient of linear expansion of the resin material (6) is larger than the coefficient of linear expansion of the electromagnetic steel sheets (4a). As a result, the difference in the thermal expansion between the resin material (6) and the permanent magnet (5) can be rendered small, and thus it is possible to more reliably prevent the resin material (6) from being damaged by thermal expansion of the permanent magnet (5).

In the present embodiment, as described above, the coefficient of linear expansion of the permanent magnet (5) is in a range of -1.5 µm/°C or less and -2.3 µm/°C or more. With such a configuration, the coefficient of linear expansion of the resin material (6) can be easily rendered larger than the coefficient of linear expansion of the permanent magnet (5).

In the present embodiment, as described above, the coefficient of linear expansion of the resin material (6) is a value that is closer to the coefficient of linear expansion of the electromagnetic steel sheets (4a) than a middle value between the coefficient of linear expansion of the electromagnetic steel sheets (4a) and the coefficient of linear expansion of the permanent magnet (5). Here, the mechanical strength of the resin material (6) is higher as the coefficient of linear expansion of the resin material (6) is larger. Thus, it is possible to secure the mechanical strength of the resin material (6) while preventing the resin material (6) from being damaged by thermal expansion of the permanent magnet (5), as the coefficient of linear expansion of the resin material (6) is a value that is closer to the coefficient of linear expansion of the electromagnetic steel sheets (4a) than the above middle value.

In the present embodiment, as described above, the magnet housing portion (10) is a space formed by overlapping hole portions (4b) provided in the electromagnetic steel sheets (4a) in an axial direction, a periphery of the space being closed. With such a configuration, a space to be filled with the resin material (6) can be easily formed by the hole portions (4b) in the stacked core (4d) constituted by stacking the electromagnetic steel sheets (4a).

In the present embodiment, as described above, the resin material (6) is configured to be melted by being heated to a first temperature (T1) or higher, and cured by being heated in a molten state to a second temperature (T2) or higher in which the second temperature (T2) is higher than the first temperature (T1). With such a configuration, the first temperature (T1) at which the resin material (6) starts being melted can be rendered lower than the second temperature (T2) at which the resin material (6) starts being cured, and thus the resin material (6) can be prevented from being cured before the resin material (6) is injected into the magnet housing portion (10).

In the present embodiment, as described above, the resin material (6) has a glass transition temperature (T3) that is higher than the second temperature (T2). Here, it is known that the thermosetting resin material (6) has a relatively large coefficient of linear expansion in the range of the glass transition temperature (T3) or higher. Thus, the coefficient of linear expansion of the resin material (6) can be rendered relatively low by curing the resin material (6) at the second temperature (T2) that is lower than the glass transition temperature (T3). As a result, it is possible to prevent the coefficient of linear expansion of the resin material (6) from becoming larger than the coefficient of linear expansion of the electromagnetic steel sheets (4a).

In the present embodiment, as described above, the method of manufacturing the rotor core (4) includes: a filling step of charging a resin material (6), which is molten and has a coefficient of linear expansion that is equal to or less than a coefficient of linear expansion of the electromagnetic steel sheets (4a), in the magnet housing portion (10) between the stacked core (4d) and the permanent magnet (5) after the arrangement step for the permanent magnet (5); a curing step of curing the resin material (6) by heating the resin material (6) after the filling step; and a cooling step of cooling the stacked core (4d) and cooling the resin material (6) after the curing step. Here, in the curing step, the resin material (6) is contracted in the state of being secured to the stacked core (4d), and thus the resin material (6) receives a tensile stress from the stacked core (4d). In the cooling step, each of the resin material (6) and the stacked core (4d) is contracted by being cooled. In this event, the amount by which the resin material (6) is contracted is equal to or less than the amount by which the electromagnetic steel sheets (4a) (stacked core (4d)) are contracted in the stacking direction of the electromagnetic steel sheets (4a), since the coefficient of linear expansion of the resin material (6) is equal to or less than the coefficient of linear expansion of the electromagnetic steel sheets (4a). In this case, the tensile stress that the resin material (6) receives from the stacked core (4d) is not increased, and thus the residual stress in the resin material (6) after the manufacturing process for the rotor core (4) can be rendered equal to or less than the tensile stress generated in the curing step for the resin material (6). As a result, the residual stress in the resin material (6) after the manufacturing process for the rotor core (4) can be rendered small compared to the case where the coefficient of linear expansion of the resin material (6) is larger than the coefficient of linear expansion of the electromagnetic steel sheets (4a) and the tensile stress that acts on the resin material (6) is increased in the cooling step for the resin material (6). As a result, it is possible to provide a method of manufacturing a rotor core (4) in which a resin material (6) can be prevented from being damaged during operation of a rotor (1) etc.

In the present embodiment, as described above, the filling step is a step of injecting the resin material (6), which is molten and has a coefficient of linear expansion that is smaller than the coefficient of linear expansion of the electromagnetic steel sheets (4a), into the magnet housing portion (10). With such a configuration, the amount by which the resin material (6) is contracted is smaller than the amount by which the electromagnetic steel sheets (4a) (stacked core (4d)) are contracted in the cooling step. Consequently, the tensile stress that the resin material (6) receives from the stacked core (4d) in the cooling step is relaxed. As a result, the residual stress in the resin material (6) after the manufacturing process for the rotor core (4) can be reduced. Consequently, it is possible to provide a method of manufacturing a rotor core (4) in which a resin material (6) can be more reliably prevented from being damaged during operation of a rotor (1) etc.

In the present embodiment, as described above, the curing step is a step of curing the resin material (6) while a tensile stress from the stacked core (4d) secured to the resin material (6) is acting on the resin material (6) as the resin material (6) is contracted when cured. The cooling step is a step of cooling the stacked core (4d) and the resin material (6) while the tensile stress acting on the resin material (6) in the curing step is relaxed as the stacked core (4d) is contracted more significantly than the resin material (6). With such a configuration, the residual stress in the resin material (6) after the manufacturing process for the rotor core (4) can be easily rendered small in the curing step and the cooling step, compared to the case where the tensile stress acting on the resin material (6) is increased as the stacked core (4d) is contracted less significantly than the resin material (6) in the cooling step.

### [Modifications]

It should be considered that the embodiment disclosed herein is illustrative in all respects and not limiting. The scope of the present invention is defined by the scope of the claims, rather than by the above description of the embodiment, and includes the meanings equivalent to the scope of the claims and all changes (modifications) that fall within the scope of the claims.

For example, while the coefficient of linear expansion of the resin material 6 is smaller than the coefficient of linear expansion of the electromagnetic steel sheets 4a in the embodiment described above, the present invention is not limited thereto. The coefficient of linear expansion of the resin material 6 may be equal to the coefficient of linear expansion of the electromagnetic steel sheets 4a.

While the coefficient of linear expansion of the resin material 6 is a value that is closer to the coefficient of linear expansion of the electromagnetic steel sheets 4a than the middle value between the coefficient of linear expansion of the electromagnetic steel sheets 4a and the coefficient of linear expansion of the permanent magnet 5 in the embodiment described above, the present invention is not limited thereto. The coefficient of linear expansion of the resin material 6 may be a value that is closer to the coefficient of linear expansion of the permanent magnets 5 than the above middle value.

While the second temperature T2, at which the resin material 6 starts being cured, is lower than the glass transition temperature T3 of the resin material 6 in the embodiment described above, the present invention is not limited thereto. The second temperature T2 may be equal to or higher than the glass transition temperature T3.

The temperature etc. indicated in the embodiment described above are merely exemplary, and may be altered as desired. The properties of the resin material 6, the stacked core 4d, the permanent magnets 5, etc. indicated in the embodiment described above are merely exemplary, and may be altered as desired.

### Description of the Reference Numerals

- 4: ROTOR CORE
- 4a: ELECTROMAGNETIC STEEL SHEET
- 4b: HOLE PORTION
- 4d: STACKED CORE
- 5: PERMANENT MAGNET
- 6: RESIN MATERIAL
- 10: MAGNET HOUSING PORTION
- T1: FIRST TEMPERATURE
- T2: SECOND TEMPERATURE
- T3: GLASS TRANSITION TEMPERATURE

## Claims

1. A rotor core comprising:
a stacked core constituted by stacking a plurality of electromagnetic steel sheets, the stacked core including a magnet housing portion provided so as to extend in a stacking direction of the electromagnetic steel sheets;
a permanent magnet disposed in the magnet housing portion of the stacked core; and
a thermosetting resin material charged in the magnet housing portion between the stacked core and the permanent magnet to fix the permanent magnet in the magnet housing portion, the resin material having a coefficient of linear expansion that is equal to or less than a coefficient of linear expansion of the electromagnetic steel sheets.

2. The rotor core according to claim 1, wherein the coefficient of linear expansion of the resin material is smaller than the coefficient of linear expansion of the electromagnetic steel sheets.

3. The rotor core according to claim 1 or 2, wherein the coefficient of linear expansion of the electromagnetic steel sheets is in a range of 11.5 µm/°C or more and 13 µm/°C or less, and the coefficient of linear expansion of the resin material is in a range of 9 µm/°C or more and 11.5 µm/°C or less.

4. The rotor core according to any one of claims 1 to 3, wherein the coefficient of linear expansion of the resin material is equal to or less than the coefficient of linear expansion of the electromagnetic steel sheets, and more than a coefficient of linear expansion of the permanent magnet.

5. The rotor core according to claim 4, wherein the coefficient of linear expansion of the permanent magnet is in a range of-1.5 µm/°C or less and -2.3 µm/°C or more.

6. The rotor core according to claim 4 or 5, wherein the coefficient of linear expansion of the resin material is a value that is closer to the coefficient of linear expansion of the electromagnetic steel sheets than a middle value between the coefficient of linear expansion of the electromagnetic steel sheets and the coefficient of linear expansion of the permanent magnet.

7. The rotor core according to any one of claims 1 to 6, wherein the magnet housing portion is a space formed by overlapping hole portions provided in the electromagnetic steel sheets in an axial direction, a periphery of the space being closed.

8. The rotor core according to any one of claims 1 to 7, wherein the resin material is configured to be melted by being heated to a first temperature or higher, and cured by being heated in a molten state to a second temperature or higher in which the second temperature is higher than the first temperature.

9. The rotor core according to claim 8, wherein the resin material has a glass transition temperature that is higher than the second temperature.

10. A method of manufacturing a rotor core that includes a stacked core constituted by stacking a plurality of electromagnetic steel sheets, the stacked core including a magnet housing portion provided so as to extend in a stacking direction of the electromagnetic steel sheets, the method comprising:
an arrangement step of disposing a permanent magnet in the magnet housing portion of the stacked core;
a filling step of charging a resin material, which is molten and has a coefficient of linear expansion that is equal to or less than a coefficient of linear expansion of the electromagnetic steel sheets, in the magnet housing portion between the stacked core and the permanent magnet after the arrangement step;
a curing step of curing the resin material by heating the resin material after the filling step; and
a cooling step of cooling the stacked core and cooling the resin material after the curing step.

11. The method of manufacturing a rotor core according to claim 10, wherein the filling step is a step of injecting the resin material, which is molten and has a coefficient of linear expansion that is smaller than the coefficient of linear expansion of the electromagnetic steel sheets, into the magnet housing portion.

12. The method of manufacturing a rotor core according to claim 11, wherein:
the curing step is a step of curing the resin material while a tensile stress from the stacked core secured to the resin material is acting on the resin material as the resin material is contracted when cured; and
the cooling step is a step of cooling the stacked core and the resin material while the tensile stress acting on the resin material in the curing step is relaxed as the stacked core is contracted more significantly than the resin material.
